# Europäisches Patentamt

# European Patent Office

# Office européen des brevets

(11) Veröffentlichungsnummer: **0 198 107**
**B1**

(12)

# EUROPÄISCHE PATENTSCHRIFT

(45) Veröffentlichungstag der Patentschrift:
**21.09.88**

(51) Int. Cl.⁴: **B 05 B 3/14,** A 01 C 23/04

(21) Anmeldenummer: **85109191.8**

(22) Anmeldetag: **23.07.85**

(54) Verteilvorrichtung zum Ausbringen von Gülle oder dgl. in der Landwirtschaft.

(30) Priorität: **16.04.85 DE 3513647**

(43) Veröffentlichungstag der Anmeldung:
**22.10.86 Patentblatt 86/43**

(45) Bekanntmachung des Hinweises auf die Patenterteilung:
**21.09.88 Patentblatt 88/38**

(84) Benannte Vertragsstaaten:
**AT BE DE FR IT NL**

(56) Entgegenhaltungen:
**FR-A-996 733**
**FR-A-2 289 810**
**FR-A-2 298 828**
**US-A-2 345 030**
**US-A-3 871 582**
**US-A-4 168 801**

(73) Patentinhaber: **Braun OHG, Fürnheim 78, D-8822 Wassertrüdingen (DE)**

(72) Erfinder: **Mössmer, Helmut, Schalkshofen 3, D-7919 Oberroth (DE)**

(74) Vertreter: **Patentanwälte Dipl.- Ing. R. Holzer Dipl.- Ing. (FH) W. Gallo, Philippine- Welser- Strasse 14, D-8900 Augsburg (DE)**

## Beschreibung

Die Erfindung betrifft eine Verteilvorrichtung zum Ausbringen von Gülle oder dgl. nach dem Oberbegriff des Anspruchs 1.

Eine derartige Verteilvorrichtung geht aus der DE-A-3 208 799 hervor.

Das Ausbringen von Gülle, Klärschlamm oder dgl. ist in der Landwirtschaft von großer Bedeutung, wobei eine möglichst breite und gleichmäßige Verteilung der ausgebrachten Gülle angestrebt wird. Dabei sollten der Tankinhalt des Gülletankwagens, die gewünschte Ausbringmenge pro Hektar und die Gewandlänge, d.h. die Länge der betreffenden landwirtschaftlichen Fläche, aufeinander abgestimmt sein, um die Bildung unnötiger Fahrspuren und übermäßigen Zeitaufwand zu vermeiden.

Die bekannte Standardausrüstung der Gülletankwagen besteht aus einem an das Auslaßventil des Tankwagens angebauten, starren, ebenen Prallteller, der den senkrecht nach oben gerichteten, durch eine Gummidüse austretenden Güllestrahl schräg nach rückwärts umlenkt und ausbreitet, wobei eine maximale Verteilbreite von etwa 7 m erreicht wird, jedoch die Gleichmäßigkeit der Verteilung nicht immer den Anforderungen entspricht.

Es sind auch schon an das Auslaßventil des Tankwagens anzubauende Verteilvorrichtungen bekannt, mit denen eine größere Verteilbreite erreicht werden kann. Hierzu gehören Schwenkdüsenverteiler, die eine mittels eines Hydraulik oder Elektromotors fortlaufend hin- und herbewegte Schwenkdüse aufweisen (DE-A-3 208 799) und Düsenbalkenverteiler, die ein quer verlaufendes Verteilerrohr mit einer Mehrzahl von Austrittsdüsen aufweisen ("Top Agrar", Nr. 4/1984, S.112 bis 114).

Die bekannten, mit Hydralikantrieb versehenen Schwenkdüsenverteiler sind aber teuer und aufwendig, haben ein hohes Gewicht und ihre Montage und Demontage am Gülletankwagen ist mühsam. Eine Verstellung der Arbeitsbreite ist zwar durch Verstellung eines Exzenters möglich, aber umständlich und schwierig. Die bekannten Düsenbalkenverteiler sind ebenfalls schwierig an- und abmontierbar und gewichtsmäßig schwer, insbesondere aber unhandlich und sperrig und haben eine starre Arbeitsbreite.

Der Erfindung liegt daher die Aufgabe zugrunde, eine billige und einfache Verteilvorrichtung zum Ausbringen von Gülle oder dgl. zu schaffen.

Diese Aufgabe wird bei einer Verteilvorrichtung der in Rede stehenden Gattung gemäß der Erfindung durch die im kennzeichnenden Teil des Anspruchs 1 angegebene Konstruktion gelöst.

Die erfindungsgemäße Verteilvorrichtung weist infolgedessen einen im Betrieb hin- und herschwenkenden Prallteller zum Ausbreiten des Güllestrahls auf, der keinen motorischen Schwenkantrieb benötigt, sondern von dem Güllestrahl selbst angetrieben wird. Der auf dem Prallteller im Güllestrahlbereich angeordnete Leitkörper lenkt den Hauptteil des Güllestrahls jeweils etwas nach der einen oder anderen Seite um, wodurch der so umgelenkte Güllestrahl dem Prallteller ein entsprechendes Drehmoment mitteilt und ihn dadurch um seine vertikale Schwenkachse dreht. An jedem Ende des Schwenkwinkelbereiches läuft der dem Leitkörper zugeordnete Umschaltmechanismus gegen den betreffenden Anschlag und bewirkt dadurch das Umschalten des Leitkörpers in seine jeweils andere Stellung, wodurch der Leitkörper dann den Güllestrahl nach der entgegengesetzten Seite lenkt und dem Prallteller dadurch ein entgegengesetztes Drehmonent mitgeteilt wird, das den Prallteller nunmehr in entgegengesetzter Richtung wieder zurückschwenkt, bis er den das andere Ende des Schwenkwinkelbereiches begrenzenden anderen Anschlag erreicht. Auf diese Weise erfolgt jeweils an beiden Enden des Drehwinkelbereiches ein automatisches Umschalten des Leitkörpers durch den ihn zugeordnet Umschaltmechanismus, so daß der Prallteller vollautomatisch und nur vom Güllestrahl selbst angetrieben ständig eine hin- und hergehende Schwenkbewegung ausführt.

Vorteilhafte Ausgestaltungen der Erfindung sind Gegenstand der Unteransprüche. Die Ausgestaltung nach Anspruch 4 ergibt dabei eine einfache Verstellbarkeit der Arbeitsbreite.

Ein Ausführungsbeispiel der Erfindung wird nachstehend unter Bezugnahme auf die anliegenden Zeichnungen mehr im einzelnen beschrieben, in welchen zeigt:

Fig.1 die Verteilvorrichtung in Seitenansicht;

Fig. 2 die Verteilvorrichtung in Frontansicht, und

Fig. 3 die Verteilvorrichtung in Draufsicht.

In den Zeichnungen ist die Verteilvorrichtung in aufgeschnittener Seitenansicht, Frontansicht und Draufsicht dargestellt.

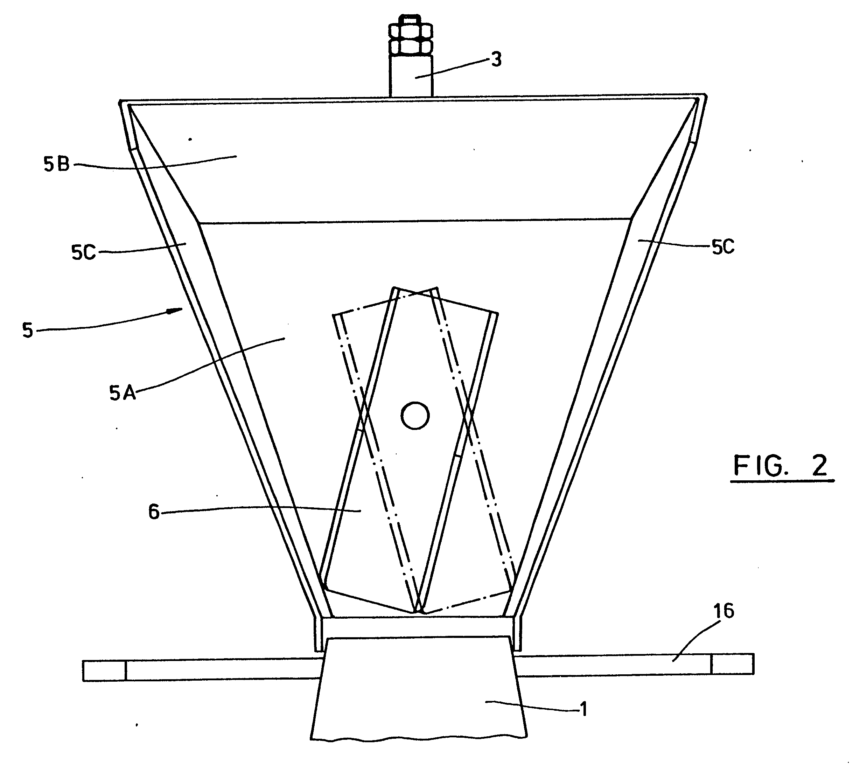

An einem Düsenstutzen 1, der am Auslaß des Tankwagens mittels eines nicht dargestellten Kuppelmechanismus ankuppelbar ist und eine vertikal nach oben ausmündende Austrittsdüse bildet, ist ein Tragbügel 2 angeschweißt, der an seinem oberen Ende ein Achsführungsrohr 3 trägt. In dem Achsführungsrohr ist ein Achszapfen 4 drehbar geführt, an welchem ein hin- und herschwenkbarer Prallteller 5 aufgehängt ist. Der Prallteller weist einen Vorprallabschnitt 5A, der nur relativ schwach mit Bezug auf die Achse des Düsenstutzens 1 geneigt ist, einen stärker geneigten Hauptprallabschnitt 5B sowie Seitenwinde 5C auf. Wie aus Fig. 2 ersichtlich ist, verbreitert sich der Prallteller vom Austrittsende des Düsenstutzens 1 nach oben, um den ursprünglich runden Güllestrahl in einen ausgebreiteten Flachstrahl umzuformen und schräg nach rückwärts oben auszuwerfen.

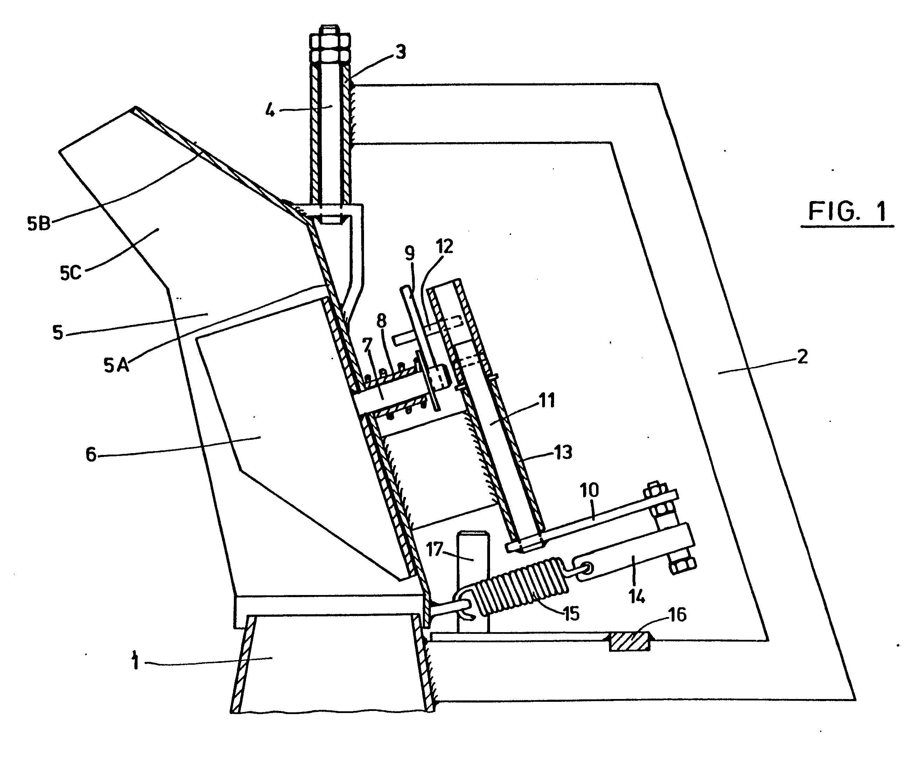

Im Vorprallabschnitt 5A des Pralltellers 5 ist ein Leitkörper 6 mittels eines Achszapfens 7 in einem an der Pralltellerrückseite befestigten Lagerrohr 8 drehbar gelagert und zwischen einer nach rechts oben und einer nach links oben weisenden Stellung hin- und herschwenkbar. Diese beiden Stellungen des Leitkörpers 6 sind in Fig 2 in Vollinien bzw. in strichpunktierten Linien dargestellt. Der Leitkörper 6 ist, wie aus den Fig. 1 und 2 ersichtlich ist, als U-Profil gestaltet und bildet damit eine Leitrinne zum Lenken des Güllestrahls.

Am hinteren Ende des Achszapfens 7 des Leitkörpers 6 ist ein Stellhebel 9 zum Umstellen des Leitkörpers 6 in seine eine oder andere Betriebsstellung angeordnet. Dieser Stellhebel 9 wirkt mit einem Kippsprungwerk zusammen, welches das automatische Umschalten des Leitkörpers 6 jeweils an Ende des gewünschten Drehwinkelbereiches des Pralltellers bewerkstelligt.

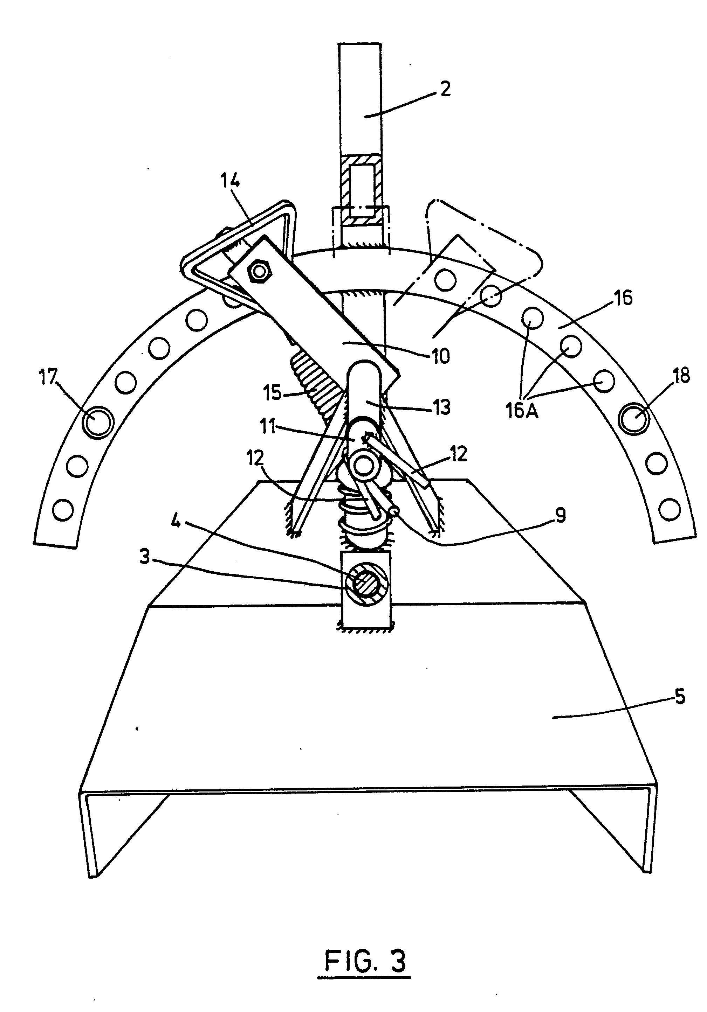

Das Kippsprungwerk besteht aus einem Schaltarm 10, einem Schaltnocken 14 und einer Zugfeder 15. Der Schaltarm 10 ist am unteren Ende einer Schaltwelle 11 angeordnet, die in einem Lagerrohr 13 drehbar gelagert ist und an deren oberem, hülsenförmigem Endbereich zwei jeweils stiftförmige Mitnehmer 12 befestigt sind, die in Fig. 3 deutlicher erkennbar sind und zum Betätigen des Stellhebels 9 dienen. Das Layerrohr 13 für die Schaltwelle 11 ist an der Rückseite des Pralltellers 5 befestigt.

Am äußeren Ende des Schaltarms 10 ist der Schaltnocken 14 drehbar aufgehängt. Die Zugfeder 15 ist mit ihrem einen Ende mit dem Schaltnocken 14 verbunden und mit ihrem anderen Ende in einer am unteren Ende des Pralltellers 5 befestigten Öse eingehängt.

Gemäß den Fig. 1 und 2 ist die Anordnung so getroffen, daß die Zugfeder 15 über den Schaltnocken 14 den Schaltarm 10 jeweils in einer bezüglich der Mittelebene des Pralltellers 5 seitwärts abgewinkelten Stellung hält. In dieser Stellung ist die Zugfeder 15 vollständig zusammengezogen. In der in Fig. 3 strichpunktiert eingezeichneten Stellung 10A, in welcher die Mittellinie des Schaltarms 10 in der Mittelebene des Pralltellers 5 liegt, ist die Zugfeder 15, wie leicht einzusehen ist, gespannt und der Schaltarm 10 befindet sich in einem labilen Kippzustand, aus welchem ihn die Zugfeder 15 durch Auslenkung nach links oder rechts in einen stabilen Zustand zu ziehen sucht, wie er in Fig. 3 dargestellt ist. Damit bildet die aus dem Schaltarm 10, dem Schaltnocken 14 und der Zugfeder 15 bestehende Anordnung ein Kippsprungwerk mit zwei stabilen Zuständen, die links bzw. rechts der labilen Kipplage gelegen sind. Die zweite stabile Lage ist in Fig. 3 strichpunktiert ebenfalls angedeutet.

Wie insbesondere aus Fig. 3 hervorgeht, ist am Tragbügel 2 ein Lochkreissegment 16 angeschweißt, in welchem eine Anzahl von Löchern 16A zum wahlweisen Einstecken von Anschlagzapfen 17 und 18 gebildet sind, welche den Drehwinkelbereich des Pralltellers 5 begrenzen.

Treibt nun der mittels des Leitkörpers 6 nach der einen oder anderen Richtung abgelenkte Güllestrahl den mit den Seitenwänden 5C versehenen Prallteller 5 im Sinne einer Linksschwenkung oder Rechtsschwenkung an, so dreht sich der Prallteller 5 um seine vertikale Drehachse, bis der Schaltnocken 14 gegen einen der beiden Anschlagstifte 17 und 18, in Fig. 3 gegen den Anschlagstift 17, läuft. Beim Anstoßen des Schaltnockens 13 gegen den Anschlagstift 17 wird, da der Prallteller aufgrund seines Drehimpulses noch seine Drehbewegung noch etwas fortsetzt, das Kippsprungwerk 10, 14, 15 unter Überwindung seiner labilen Kipplage in seine jeweils andere stabile Lage umgeschaltet, wodurch jeweils der eine oder andere Mitnehmer 12 den Stellhebel 9 mitnimmt und dadurch den Leitkörper 6 in seine andere Stellung umschaltet. Damit wird die Schwenkrichtung des Pralltellers 5 umgekehrt, bis der Schaltnocken 14 gegen den anderen Anschlagzapfen (den Anschlagzapfen 18 läuft und das Kippsprungwerk wiederum in seine andere stabile Lage umschaltet. Auf diese Weise schwenkt der Prallteller unter dem Antrieb des Güllestrahls vollautomatisch hin und her.

Wie in Fig. 3 erkennbar ist, wirken die beiden Mitnehmer 12 mit Spiel mit dem Stellhebel 9 des Leitkörpers 6 zusammen. Dieses Spiel ist so bemessen, daß die Umschaltbewegung des Leitkörpers jeweils erst dann einsetzt, wenn der Schaltarm 10 über seine labile Kipplage hinübergeschwenkt worden ist und damit die Endphase des Umschaltvorgangs zwangsläufig abläuft.

**Patentansprüche**

1. Verteilvorrichtung zum Ausbringen von Gülle oder dgl., die an die etwa vertikal nach oben gerichtete Auslaßdüse eines Tankwagens anbaubar ist und ein um eine etwa vertikale Achse innerhalb eines gegebenen Schwenkwinkelbereiches hin- und herschwenkbares Verteilerorgan aufweist, dadurch gekennzeichnet, daß

a) das Verteilerorgan ein frei schwenkbarer, den Güllestrahl oder dgl. nach rückwärts umlenkender und flach ausbreitender Prallteller (5) ist,

b) innerhalb des Pralltellers (5) im Strömungsweg des Güllestrahls ein Leitkörper (6) angeordnet ist, der zwischen einer schräg nach links oben und einer schräg nach rechts oben weisenden Stellung umschaltbar ist, und

c) dem Leitkörper (6) ein am Prallteller (5) angeordneter Umschaltmechanismus (9 bis 15) zugeordnet ist, der mit zwei ortsfest angeordneten, den Schwenkwinkel des Pralltellers begrenzenden Anschlägen (17, 18) zusammenwirkt, um den Leitkörper (6) in seine jeweils andere Stellung umzuschalten.

2. Verteilvorrichtung nach Anspruch 1, dadurch gekennzeichnet, daß der Umschaltmechanismus (9 bis 15) ein Kippsprungwerk (10, 14, 15) aufweist.

3. Verteilvorrichtung nach Anspruch 2, dadurch gekennzeichnet, daß das Kippsprungwerk (10, 14, 15) einen mit dem Leitkörper (6) gekuppelten, federbelasteten schwenkbaren Schaltarm (10) aufweist, der an seinem freien Ende einen mit den Anschlägen (17, 18) zusammenwirkenden Schaltnocken (14) trägt und zwei symmetrisch beiderseits seiner labilen Kipplage befindliche stabile Ruhestellungen aufweist.

4. Verteilvorrichtung nach einem der Ansprüche 1 bis 3, dadurch gekennzeichnet, daß die Anschläge (17, 18) verstellbar sind.

5. Verteilvorrichtung nach Anspruch 4, dadurch gekennzeichnet, daß die Anschläge durch wahlweise in die Löcher (16A) eines Lochkreissegments (16) einsteckbare Zapfen (17, 18) gebildet sind.

6. Verteilvorrichtung nach einem der Ansprüche 1 bis 6, dadurch gekennzeichnet, daß der Leitkörper (6) als Leitkanal mit U-Querschnitt ausgebildet ist.

7. Verteilvorrichtung nach einem der Ansprüche 1 bis 6, dadurch gekennzeichnet, daß der Prallteller (5) einen bezüglich der Achse der Auslaßdüse (1) nur schwach geneigten, den Leitkörper (6) tragenden Vorprallabschnitt (5A) und einen sich an dessen Ende anschließenden, stärker geneigten Hauptprallabschnitt (5B) sowie divergierende Seitenwände (5C) aufweist.

8. Verteilvorrichtung nach Anspruch 7, dadurch gekennzeichnet, daß die Neigung des Hauptprallabschnitts (5B) des Pralltellers (5) mit bezug auf den Vorprallabschnitt (5A) verstellbar ist.

9. Verteilvorrichtung nach Anspruch 3, dadurch gekennzeichnet, daß der Schaltarm (10) mit zwei Mitnehmern (12) verbunden ist, die auf einen mit dem Leitkörper (6) verbundenen Stellhebel (9) wirken.

10. Verteilvorrichturng nach Anspruch 9, dadurch gekennzeichnet, daß die beiden Mitnehmer (12) jeweils mit solchem Spiel bezüglich des Stellhebels (9) angeordnet sind, daß das Mitnehmen des Stellhebels beim Umschaltvorgang jeweils erst dann einsetzt, wenn der Schaltarm (10) über die labile Kipplage des Kippsprungwerks hinwegbewegt worden ist.

**Claims**

1. Distributing apparatus for the discharging of liquid manure or the like, which can be attached to the approximately vertically upward directed outlet nozzle of a tanker and has a distributing member, which can be swivelled to and fro about an approximately vertical axis within a given swivel angle range, characterized in that

a) the distributing member is a freely swivelling baffle plate (5) rearwardly deflecting and flatly spreading the jet of liquid manure or the like,

b) there is arranged within the baffle plate (5), in the flow path of the jet of liquid manure, a guide element (6), which can be switched between a position pointing obliquely up to the left and a position pointing obliquely up to the right, and

c) the guide element (6) is assigned a switching-over mechanism, (9 to 15), which is arranged on the baffle plate (5) and interacts with two stops (17, 18), arranged in fixed position and limiting the swivelling angle of the baffle plate, in order to switch over the guide element (6) into its respective other position.

2. Distributing apparatus according to Claim 1, characterized in that the switching-over mechanism (9 to 15) has a tilting snap-action mechanism (10, 14, 15).

3. Distributing apparatus according to Claim 2, characterized in that the tilting snap-action mechanism (10, 14, 15) has a spring-loaded swivelling trip arm (10), which is coupled to the guide element (6) and bears at its free end a trip cam (14) interacting with the stops (17, 18) and has two stable rest positions located symmetrically on either side of its unstable tilting position.

4. Distributing apparatus according to one of Claims 1 to 3, characterized in that the stops (17, 18) are adjustable.

5. Distributing apparatus according to Claim 4, characterized in that the stops are formed by pegs (17, 18) which can be inserted optionally in the holes (16A) of a perforated circular segment (16).

6. Distributing apparatus according to one of Claims 1 to 16, characterized in that the guide element (6) is designed as a guide channel of U cross-section.

7. Distributing apparatus according to one of Claims 1 to 6, characterized in that the baffle plate (5) has a front baffle section (5A), only slightly inclined with respect to the axis of the outlet nozzle (1) and bearing the guide element (6), and, adjoining at its end, a more inclined main baffle section (5B) as well as diverging side walls (5C).

8. Distributing apparatus according to Claim 7, characterized in that the inclination of the main baffle section (5B) of the baffle plate (5) is adjustable with respect to the front baffle section (5A).

9. Distributing apparatus according to Claim 3, characterized in that the trip arm (10) is connected to two drivers (12), which act on an adjusting lever (9) connected to the guide element (6).

10. Distributing apparatus according to Claim 9, characterized in that the two drivers (12) are in each case arranged with such a play with respect to the adjusting lever (9) that the driving of the adjusting lever during the switching-over operation does not commence in each case until the trip arm (10) has been moved beyond the unstable tilting position of the tilting snap-action mechanism.

**Revendications**

1. Dispositif répartiteur pour l'épandage de purin ou analogue, pouvant être monté sur la buse de décharge, dirigée sensiblement verticalement vers le haut, d'une citerne mobile et présentant un organe répartiteur capable d'exécuter un mouvement de pivotement alternatif dans une plage angulaire donnée, caractérisé par le fait que:

a) l'organe répartiteur est une goulotte de rebondissement (5) pouvant pivoter librement, qui étale le jet de purin ou analogue en le déviant vers l'arrière;

b) un déflecteur (6) est agencé à l'intérieur de la goulotte de rebondissement, sur le trajet d'écoulement du jet de purin, et peut être manoeuvré entre une position dans laquelle il est incliné à gauche vers le haut et une position dans laquelle il est incliné à droite vers le haut; et

c) un mécanisme de manoeuvre en va-et-vient (9 à 15) agencé sur la goulotte de rebondissement (5) est associé au déflecteur (6) et coopère avec deux butées (17, 18) stationnaires qui limitent l'angle de pivotement de la goulotte de rebondissement, de manière à faire passer à chaque fois le déflecteur (6) à son autre position.

2. Dispositif répartiteur selon revendication 1, caractérisé par le fait que le mécanisme de manoeuvre (9 à 15) présente un dispositif bistable (10, 14, 15).

3. Dispositif répartiteur selon revendicaton 2, caractérisé par le fait que le dispositif bistable (10, 14, 15) comporte un bras de manoeuvre (10) pouvant pivoter, chargé par ressort, couplé au déflecteur (6), et portant à son extrémité libre une came de manoeuvre (14) coopérant avec les butées (17, 18), et présente deux positions de repos stables situées symétriquement de part et d'autre de sa position angulaire d'équilibre instable.

4. Dispositif répartiteur selon l'une des revendications 1 à 3, caractérisé par le fait que les butées (17, 18) sont réglables.

5. Dispositif répartiteur selon revendication 4, caractérisé par le fait que la butées sont formées par des chevilles (17, 18) enfichables sélectivement dans les trous (16A) d'un segment circulaire à trous (16).

6. Dispositif répartiteur selon l'une des revendications 1 à 6, caractérisé par le fait que le déflecteur (6) est réalisé sous la forme d'un canal de guidage à section droite en U.

7. Dispositif répartiteur selon l'une des revendications 1 à 6, caractérisé par le fait que la goulotte de rebondissement (5) présente une portion de rebondissement préalable (5A) qui n'est que faiblement inclinée par rapport à l'axe de la buse de décharge (1) et qui porte le déflecteur (6), et présente, se raccordant à l'extrémité de la portion de rebondissement préalable, une portion de rebondissement principal (5B) plus fortement inclinée, et comporte en outre des paros latérales divergentes (5C).

8. Dispositif répartiteur selon revendication 7, caractérisé par le fait que l'inclinason de la port on de rebondissenent principal (5B) de la goulotte de rebondissement (5), par rapport à la portion de rebondissement préalable (5A), est réglable.

9. Dispositif repartiteur selon revendication 3, caractérisé par le fait que le bras de manoeuvre (10) est relié à deux entraîneurs (12) qui agissent sur un levier positionneur (9) solidaire du déflecteur (6).

10. Dispositif répartiteur selon revendication 9, caractérisé par le fait que les deux entraîneurs (12) sont agences chacun avec un jeu tel, par rapport au levier positionneur (9), que l'entraînement du levier positionneur ne s'établit, lors de chaque processus de passage d'une position stable à l'autre, que si le bras de manoeuvre (10) a franchi la position d'équilibre instable du dispositif de basculement bistable.

FIG. 1

0 198 107

FIG. 2

0 198 107

FIG. 3